# EUROPEAN PATENT APPLICATION

(11) **EP 3 648 308 A1**
(43) Date of publication of application: **06.05.2020**
(21) Application number: 19200235.0
(22) Date of filing: 27.09.2019
(51) Int. Cl.: H02K 1/27

(54) **LOW COGGING TORQUE, HIGH TORQUE DENSITY TRACTION MOTOR**

(30) Priority: 23.10.2018 US 201862766523 P; 06.11.2018 US 201816181779; 06.11.2018 US 201816181612
(71) Applicant: Atieva, Inc., Newark, CA 94560 (US)
(72) Inventor: DLALA, Emad, Pleasanton, California 94566 (US)
(74) Representative: Ungerer, Olaf

(57) **Abstract**

A rotor assembly is provided that reduces cogging torque in a permanent magnet motor, thereby reducing potential NVH issues. The assembly utilizes two layers of magnets within the lamination stack, an inner layer that is positioned closer to the rotor and comprised of larger magnets, and an outer layer that is positioned closer to the outer lamination stack surface and comprised of smaller magnets. The magnets within each layer are configured in pairs, with each magnet pair forming a V-shaped arrangement.

## Description

### FIELD OF THE INVENTION

The present invention relates generally to electric motors and, more particularly, to a means of reducing cogging torque in a permanent magnet motor.

### BACKGROUND OF THE INVENTION

In response to the demands of consumers who are driven both by ever-escalating fuel prices and the dire consequences of global warming, the automobile industry is slowly starting to embrace the need for ultra-low emission, high efficiency cars. While some within the industry are attempting to achieve these goals by engineering more efficient internal combustion engines, others are incorporating hybrid or all-electric drivetrains into their vehicle line-ups. To meet consumer expectations, however, the automobile industry must not only achieve a greener drivetrain, but must do so while maintaining reasonable levels of performance, range, reliability, safety and cost.

The most common approach to achieving a low emission, high efficiency car is through the use of a hybrid drivetrain in which an internal combustion engine (ICE) is combined with one or more electric motors. While hybrid vehicles provide improved gas mileage and lower vehicle emissions than a conventional ICE-based vehicle, due to their inclusion of an internal combustion engine they still emit harmful pollution, albeit at a reduced level compared to a conventional vehicle. Additionally, due to the inclusion of both an internal combustion engine and an electric motor(s) with its accompanying battery pack, the drivetrain of a hybrid vehicle is typically more complex than that of either a conventional ICE-based vehicle or an all-electric vehicle, resulting in increased cost and weight. Accordingly, several vehicle manufacturers are designing vehicles that only utilize an electric motor, thereby eliminating one source of pollution while significantly reducing drivetrain complexity.

In order to gain widespread acceptance of electric vehicles (EVs), it is critical that these cars meet user expectations with regards to both performance and reliability. Accordingly, EV manufacturers study every aspect of an intended EV design with an eye towards meeting or surpassing the standards set by conventional cars. One set of vehicle characteristics of concern are the noise, vibration and harshness (NVH) characteristics of a car. The NVH characteristics can not only be experienced by cabin occupants, but can also lead to premature component failure in a variety of vehicle subsystems including a vehicle's drivetrain, suspension, and steering assemblies.

One potential source of NVH issues is a motor's cogging torque. Cogging torque is an undesirable phenomenon that is produced by the interaction of the rotor poles with the stator teeth during rotor motion. While the average cogging torque in a motor is zero due to the opposite polarity of the poles, the oscillation of the torque between positive and negative as the edges of each pole crosses between stator teeth can result in NVH issues in the rotor. These vibrations can, in turn, adversely affect the motor, bearings and related gearing equipment. This can be especially problematic if the differential is mounted within the rotor shaft.

Accordingly, what is needed is an effective means to reduce cogging torque in a permanent magnet motor, thereby reducing potential NVH issues. The present invention provides such a means.

### SUMMARY OF THE INVENTION

The present invention provides a rotor assembly for an electric motor comprising: (i) a rotor; (ii) a lamination stack formed of a plurality of lamination layers, where the lamination stack is stacked along the longitudinal axis of the rotor; (iii) a first plurality of cavities within the lamination stack, where a first plurality of permanent magnets are contained within the first plurality of cavities, where the first plurality of permanent magnets are configured as a first plurality of magnet pairs, and where each magnet pair is arranged in a first V-shaped configuration; and (iv) a second plurality of cavities within the lamination stack, where a second plurality of permanent magnets are contained within the second plurality of cavities, where each permanent magnet of the second plurality of permanent magnets is larger than each permanent magnet of the first plurality of permanent magnets, where the second plurality of permanent magnets are configured as a second plurality of magnet pairs, and where each magnet pair is arranged in a second V-shaped configuration.

In one aspect, the second plurality of permanent magnets contained within the second plurality of cavities are positioned closer to an inner lamination stack surface than the first plurality of permanent magnets contained within the first plurality of cavities. The first V-shaped configuration may be defined by a first angle while the second V-shaped configuration may be defined by a second angle, where a single line bisects both the first angle and the second angle.

In another aspect, each pair of magnets of the first plurality of magnet pairs is comprised of a first magnet and a second magnet. The first end portion of the first magnet is closer to the first apex corresponding to the first angle than a second end portion of the first magnet. The first end portion of the second magnet is closer to the first apex than the second end portion of the second magnet. As such, the first end portion of the first magnet is closer to the inner lamination stack surface than the second end portion of the first magnet, and the first end portion of the second magnet is closer to the inner lamination stack surface than the second end portion of the second magnet. Similarly, each pair of magnets of the second plurality of magnet pairs is comprised of a third magnet and a fourth magnet. The first end portion of the third magnet is closer to the second apex corresponding to the second angle than a second end portion of the third magnet. The first end portion of the fourth magnet is closer to the second apex than the second end portion of the fourth magnet. As such, the first end portion of the third magnet is closer to the inner lamination stack surface than the second end portion of the third magnet, and the first end portion of the fourth magnet is closer to the inner lamination stack surface than the second end portion of the fourth magnet.

In another aspect, the single line bisecting the first and second angles may be orthogonal to the outer lamination stack surface. The first angle corresponding to the first V-shaped configuration may be larger than the second angle corresponding to the second V-shaped configuration. The first plurality of magnets is preferably closer to the outer lamination stack surface than the second plurality of magnets. An epoxy resin, preferably a thermosetting epoxy resin, may be used to fix the first plurality of permanent magnets within the first plurality of cavities and fix the second plurality of permanent magnets within the second plurality of cavities.

A further understanding of the nature and advantages of the present invention may be realized by reference to the remaining portions of the specification and the drawings.

### BRIEF DESCRIPTION OF THE DRAWINGS

It should be understood that the accompanying figures are only meant to illustrate, not limit, the scope of the invention and should not be considered to be to scale. Additionally, the same reference label on different figures should be understood to refer to the same component or a component of similar functionality.
Fig. 1 provides a cross-sectional view of a powertrain assembly that may be used with the present invention;
Fig. 2 provides a perspective view of the lamination stack of the powertrain assembly shown in Fig. 1:
Fig. 3 provides a cross-sectional view of the lamination stack and the stator;
Fig. 4 provides a close-up of a portion of the cross-sectional view shown in Fig. 3;
Fig. 5 shows the flux lines through a portion of the lamination and, in particular, through a pair of magnets in the outer layer and a pair of magnets in the inner layer; and
Fig. 6 graphically illustrates the benefits of the dual magnet layer approach of the present invention.

### DESCRIPTION OF THE SPECIFIC EMBODIMENTS

As used herein, the singular forms "a", "an" and "the" are intended to include the plural forms as well, unless the context clearly indicates otherwise. The terms "comprises", "comprising", "includes", and/or "including", as used herein, specify the presence of stated features, integers, steps, operations, elements, and/or components, but do not preclude the presence or addition of one or more other features, integers, steps, operations, elements, components, and/or groups thereof. As used herein, the term "and/or" and the symbol "/" are meant to include any and all combinations of one or more of the associated listed items. Additionally, while the terms first, second, etc. may be used herein to describe various steps or calculations, these steps or calculations should not be limited by these terms, rather these terms are only used to distinguish one step or calculation from another. For example, a first calculation could be termed a second calculation; similarly a first step could be termed a second step; similarly a first component could be termed a second component, all without departing from the scope of this disclosure.

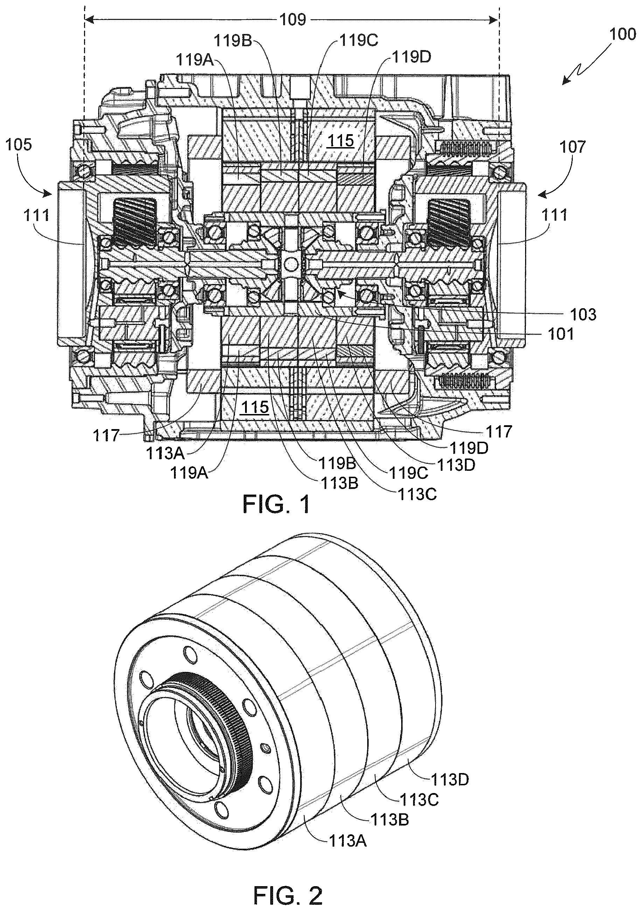

As previously noted, cogging torque is a common consideration in the design of permanent magnet motors, and is of particular concern when the electric motor is the traction motor in a vehicle given that cogging torque can lead to undesirable NVH characteristics. Such NVH characteristics may be experienced by cabin occupants and can often lead to premature component failure in a variety of vehicle subsystems including the vehicle's drivetrain, suspension, and steering assemblies. To reduce cogging torque, thereby reducing the associated undesirable NVH characteristics, a common approach is to divide the rotor lamination stack into several sections and then skew those sections relative to one another. This approach is illustrated in Figs. 1 and 2.

Fig. 1 provides a cross-sectional view of an exemplary powertrain assembly 100 that utilizes lamination stack skewing to reduce cogging torque. In the illustrated assembly, a hollow rotor shaft 101 is employed. Hollow rotor shaft 101 contains differential gear assembly 103. This configuration allows the powertrain to be arranged such that planetary assembly 105, differential gear assembly 103, and planetary assembly 107 are coaxially aligned, thereby creating a powertrain with a relatively short width 109, where width 109 is measured between the bottom surfaces 111 of the two constant velocity (i.e., CV) joint housing members. The lamination stack used in assembly 100 is comprised of four lamination sections (also referred to herein as layers) 113A-113D. Fig. 2 provides a perspective view of the lamination stack of assembly 100. Surrounding the rotor lamination stack is stator 115. Visible in this view are the stator windings 117 that extend from either end of the stator.

In the cross-sectional view of assembly 100 provided by Fig. 1, the permanent magnets within each section are visible. Specifically, within layer 113A permanent magnets 119A are visible; within layer 113B permanent magnets 119B are visible; within layer 113C permanent magnets 119C are visible; and within layer 113D permanent magnets 119D are visible.

In order to reduce cogging torque, each section 113A-113D is offset by a certain angle from the adjacent section, thereby offsetting the permanent magnets held within each layer by the same angle. As a result of skewing the lamination sections and thus offsetting the permanent magnets in the lamination stack, torque oscillation is reduced since the concentration of magnetic forces per stator tooth during rotor rotation is reduced. This, in turn, reduces cogging torque.

While skewing lamination layers is an effective means of reducing cogging, this approach does have disadvantages. For example, manufacturing this type of rotor assembly is more difficult than a typical non-skewed assembly due to an increase in both the number of parts and the number of assembly steps. Additionally, if the rotor undergoes a magnetization step after assembly as is common, the offset between lamination layers can lead to accuracy issues in the magnetizing direction of each layer. Furthermore, skewing the lamination creates a leakage flux between adjacent skewed sections that leads to significant reductions in both torque and power.

In accordance with the present invention, the magnets within the rotor lamination layers are skewed, specifically through the addition of a secondary layer of magnets. While this approach eliminates the need for skewing lamination layers as described above, it should be understood that the present invention can be used in a lamination stack with skewed lamination layers. The inventor has found, however, that lamination layer skewing is not required when utilizing the disclosed approach of multiple magnet layers.

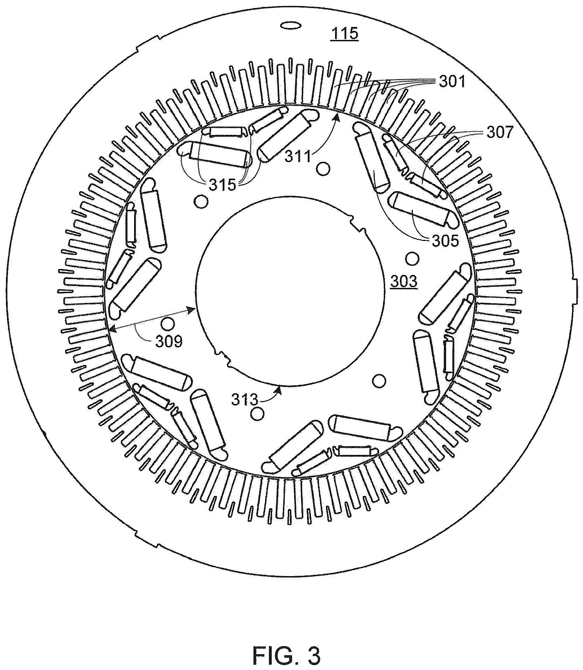

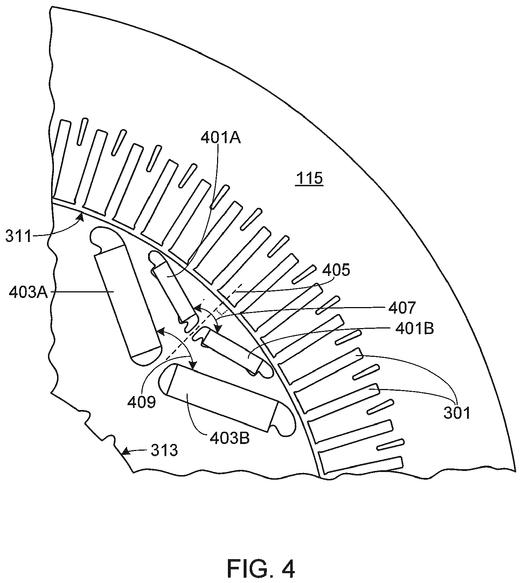

Fig. 3 provides a cross-sectional view of the rotor assembly in accordance with the invention. Fig. 4 provides a close-up view of a portion of the cross-section shown in Fig. 3. In these views, stator 115, stator slots 301 and rotor lamination layer 303 are all visible. As previously noted, the rotor lamination includes a first layer of magnets 305 and a second layer of magnets 307. The first layer of magnets 305, also referred to herein as the inner layer of magnets 305, are positioned closer to the rotor than the second layer of magnets 307.

Several factors must be considered in determining the preferred locations of the inner and outer magnet layers. First, the width 309 of the lamination stack affects possible placement locations for the magnets. The lamination width 309 is governed by the size of the motor as well as the size of the rotor to which the lamination stack is to be attached, where the lamination stack may be directly attached to the rotor or there may be an intervening layer between the lamination stack and the rotor. Clearly the inclusion of a differential, as preferred, within the rotor affects rotor size, in general requiring a larger rotor in order to provide sufficient volume for the integrated differential. Assuming a given motor size, as the rotor size increases typically the lamination stack width decreases, leading to decreased flexibility in magnet placement. Second, the location of the magnets affects the magnetic flux, and therefore the strength of the cogging effect. The closer that the magnets are placed to the outer lamination stack surface 311, the stronger the magnetic flux and thus the stronger the generated torque as well as the generated cogging torque. Therefore there is a direct trade-off between desired motor torque and undesired cogging torque.

In general, in order to achieve skewing within the lamination stack, the inventor has found the best approach is to use two layers of magnets where each layer of magnets is comprised of a plurality of magnet pairs. Each pair of magnets is arranged in a V-shaped configuration. Preferably the outermost pair of magnets, e.g., magnets 401A and 401B in Fig. 4, are aligned with the innermost pair of magnets, e.g., magnets 403A and 403B, such that the same line 405 bisects both magnet pairs. Bisecting line 405 is orthogonal to the lamination stack surface 311. For each pair of magnets and as shown, the distance between the adjacent edges of the magnets increases as the outer lamination surface 311 is approached. Therefore the apex of each angle defining each pair of magnets, rather than the outermost edges of each magnet pair, is closer to the inner lamination stack surface 313.

In general, the smaller the angle that defines, in part, the locations of the magnets, the higher the reluctance torque. Unfortunately as this angle decreases, shown as angle 407 for magnets 401A/401B and as angle 409 for magnets 403A/403B in Fig. 4, the cogging torque increases. As noted above, and as noted above relative to this invention, to mitigate cogging torque the lamination stack utilizes two layers of permanent magnets. The inventor has determined that optimal mitigation of cogging torque is achieved when the inner layer of magnets (e.g., magnets 305 in Fig. 3 and magnets 403A/403B in Fig. 4) are larger and utilize a smaller separation angle 409 than the outer layer of magnets (e.g., magnets 307 in Fig. 3 and magnets 401A/401B in Fig. 4).

It will be appreciated by those of skill in the art that the exact dimensions and locations for the inner and outer layers of magnets depends on the desired operational characteristics of the motor as well as the size of the motor. In general terms, the larger magnets included in the inner layer of magnets are approximately three times larger than the smaller magnets populating the outer layer of magnets. Additionally the separation angle of the larger magnets in the inner layer (e.g., angle 405 in Fig. 4) is preferably smaller than the separation angle of the smaller magnets in the outer layer (e.g., angle 407 in Fig. 4). In the preferred embodiment in which the lamination stack is approximately 110 millimeters in length with an approximate outside diameter of 150 millimeters and an approximate inside diameter of 75 millimeters, the magnets comprising the outer layer of magnets are 3 millimeters by 12 millimeters by 27 millimeters while the magnets comprising the inner layer of magnets are 6 millimeters by 20 millimeters by 27 millimeters. In this embodiment the larger magnets comprising the inner layer of magnets account for approximately 80 percent of torque production.

In the preferred embodiment, both the large and small magnets comprising the inner and outer layers are held in place within the corresponding lamination stack cavities with an epoxy thermosetting resin. Preferably an epoxy resin injection molding process is used to apply the bonding material to the lamination stack. The epoxy resin holds the magnets firmly in place, thereby creating a mechanically rigid stack. Additionally, by filling in the voids between the magnets and the slots in the lamination stack (e.g., voids 315 shown in Fig. 3), the epoxy resin prevents oils from stagnating within the voids which can, in turn, create imbalances within the stack. Furthermore, given that the epoxy resin has better thermal properties than air, filling the voids with epoxy resin creates a lamination stack with more uniform thermal properties. Lastly, as the present invention utilizes multiple magnet layers rather than lamination layer skewing to reduce cogging, the entire stack can be molded in one shot. In contrast, when layer skewing is used, each layer is typically molded by itself, thus adding to cost and manufacturing time.

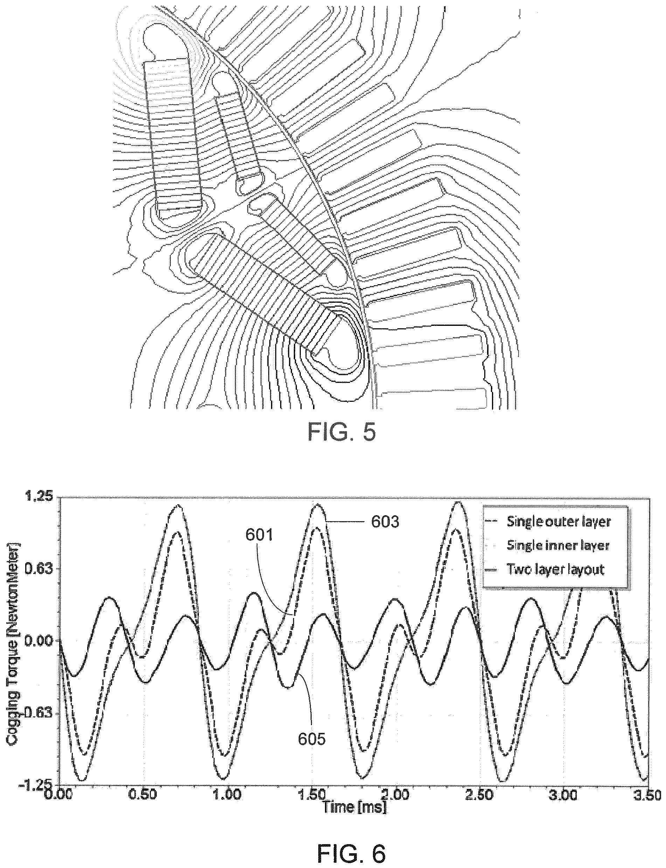

Fig. 5 shows the magnetic flux lines through a portion of the lamination and, in particular, through a pair of magnets in the outer layer and a pair of magnets in the inner layer.

Fig. 6 graphically illustrates the benefits of the dual layer approach of the present invention with respect to cogging torque. Curve 601 shows cogging torque over time utilizing only the outer layer of magnets 307 while curve 603 shows cogging torque over the same time period utilizing only the inner layer of magnets 305. When the lamination stack includes both the inner and outer layers, the cogging torque is reduced by a factor of more than two as shown by curve 605.

Systems and methods have been described in general terms as an aid to understanding details of the invention. In some instances, well-known structures, materials, and/or operations have not been specifically shown or described in detail to avoid obscuring aspects of the invention. In other instances, specific details have been given in order to provide a thorough understanding of the invention. One skilled in the relevant art will recognize that the invention may be embodied in other specific forms, for example to adapt to a particular system or apparatus or situation or material or component, without departing from the spirit or essential characteristics thereof. Therefore the disclosures and descriptions herein are intended to be illustrative, but not limiting, of the scope of the invention.

## Claims

1. A rotor assembly for an electric motor, comprising:
a rotor;
a lamination stack comprising a plurality of lamination layers, wherein said lamination stack is stacked along the longitudinal axis of said rotor;
a first plurality of cavities within said lamination stack;
a first plurality of permanent magnets contained within said first plurality of cavities, said first plurality of permanent magnets configured as a first plurality of magnet pairs, wherein each magnet pair of said first plurality of magnet pairs is arranged in a first V-shaped configuration;
a second plurality of cavities within said lamination stack; and
a second plurality of permanent magnets contained within said second plurality of cavities, wherein each permanent magnet of said second plurality of permanent magnets is larger than each permanent magnet of said first plurality of permanent magnets, said second plurality of permanent magnets configured as a second plurality of magnet pairs, wherein each magnet pair of said second plurality of magnet pairs is arranged in a second V-shaped configuration.

2. The rotor assembly of claim 1, wherein said second plurality of permanent magnets contained within said second plurality of cavities is positioned closer to an inner lamination stack surface than said first plurality of permanent magnets contained within said first plurality of cavities.

3. The rotor assembly of claim 2, wherein said first V-shaped configuration is defined by a first angle, wherein said second V-shaped configuration is defined by a second angle, and wherein a single line bisects said first angle and bisects said second angle.

4. The rotor assembly of claim 3, wherein each pair of magnets of said first plurality of magnet pairs is comprised of a first magnet and a second magnet, wherein a first end portion of said first magnet is closer to a first apex corresponding to said first angle than a second end portion of said first magnet, wherein a first end portion of said second magnet is closer to said first apex than a second end portion of said second magnet, wherein said first end portion of said first magnet is closer to said inner lamination stack surface than said second end portion of said first magnet, and wherein said first end portion of said second magnet is closer to said inner lamination stack surface than said second end portion of said second magnet; and
wherein each pair of magnets of said second plurality of magnet pairs is comprised of a third magnet and a fourth magnet, wherein a first end portion of said third magnet is closer to a second apex corresponding to said second angle than a second end portion of said third magnet, wherein a first end portion of said fourth magnet is closer to said second apex than a second end portion of said fourth magnet, wherein said first end portion of said third magnet is closer to said inner lamination stack surface than said second end portion of said third magnet, and wherein said first end portion of said fourth magnet is closer to said inner lamination stack surface than said second end portion of said fourth magnet.

5. The rotor assembly of any one of claims 3 and 4, wherein said single line bisecting said first and second angles is orthogonal to an outer lamination stack surface.

6. The rotor assembly of any one of claims 3 and 4, wherein said first angle is larger than said second angle.

7. The rotor assembly of any one of claims 1-4, further comprising an epoxy resin, said epoxy resin fixing said first plurality of permanent magnets within said first plurality of cavities and fixing said second plurality of permanent magnets within said second plurality of cavities.

8. The rotor assembly of claim 7, wherein said epoxy resin is a thermosetting epoxy resin.

9. The rotor assembly of any one of claims 1-4, wherein each permanent magnet of said second plurality of permanent magnets is approximately three times larger than each permanent magnet of said first plurality of permanent magnets.
